# EUROPEAN PATENT SPECIFICATION

(11) **EP 2 892 261 B1**
(45) Date of publication and mention of the grant of the patent: **20.02.2019**
(21) Application number: 13833505.4
(22) Date of filing: 19.08.2013
(51) Int. Cl.: H04W 8/26, H04W 16/32

(54) **MOBILE COMMUNICATION METHOD, RADIO BASE STATION, AND MOBILE STATION**
MOBILKOMMUNIKATIONSVERFAHREN, DRAHTLOSE BASISSTATION UND MOBILSTATION
PROCÉDÉ DE COMMUNICATIONS MOBILES, STATION DE BASE SANS FIL ET STATION MOBILE

(30) Priority: 29.08.2012 JP 2012188688
(43) Date of publication of application: 08.07.2015
(73) Proprietor: NTT DOCOMO, INC., Chiyoda-ku Tokyo 100-6150 (JP)
(72) Inventor: UCHINO, Tooru, Tokyo 100-6150 (JP); ABETA, Sadayuki, Tokyo 100-6150 (JP); ISHII, Hiroyuki, Palo Alto, California 94304 (US)
(74) Representative: Hoffmann Eitle
(86) International application number: PCT/JP2013/072045
(87) International publication number: WO 2014/034450

(56) References cited:
- EP-A1- 2 230 872
- US-A1- 2010 278 037
- NTT DOCOMO ET AL: "Requirements, Candidate Solutions & Technology Roadmap for LTE Rel-12 Onward", 3GPP WORKSHOP ON RELEASE 12 AND ONWARDS RWS-120010, 11 June 2012 (2012-06-11), XP055176152,
- NTT DOCOMO, INC.: 'Requirements, Candidate Solutions & Technology Roadmap for LTE Rel-12 Onward' 3GPP WORKSHOP ON RELEASE 12 AND ONWARDS RWS-120010 11 June 2012, XP055176152
- ETSI MCC: 'Report of 3GPP RAN Workshop on Release 12 and onwards' 3GPP RAN WORKSHOP ON RELEASE 12 AND ONWARDS RWS-120052 11 June 2012, LJUBLJANA, SLOVENIA, page 9, XP050647938

## Description

### TECHNICAL FIELD

The present invention relates to a mobile communication method, a radio base station, and a mobile station.

### BACKGROUND ART

In LTE (Long Term Evolution), a radio base station eNB is configured to transmit/receive data to and from a mobile station UE performing communications in a cell under the control thereof, with a C-RNTI (Cell-Radio Network Temporary Identify) allocated to the mobile station UE as illustrated in Fig. 6 (see, non patent document 1).

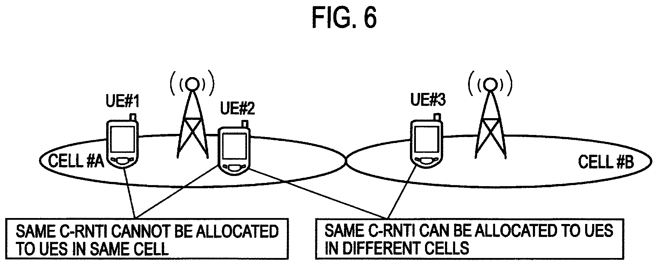

The C-RNTI is allocated on a cell-by-cell basis. In LTE, as illustrated in Fig. 6, a same C-RNTI cannot be allocated to a mobile station UE#1 and a mobile station UE#2 which perform communications in a same cell #A, and a same C-RNTI can be allocated to a mobile station UE#1 (or a mobile station UE#2) and a mobile station UE#3 which perform communications in different cells #A/#B.

In addition, the radio base station eNB is configured to assign resources for transmitting downlink data or uplink data by using the C-RNTI allocated to the mobile station UE.

Meanwhile, in the "Rel-12 workshop" of 3GPP, many proposals on "Small cell enhancement" have been made as topics of FRA (Future Radio Access).

In such proposals, a concept of "Phantom cell" has been discussed.

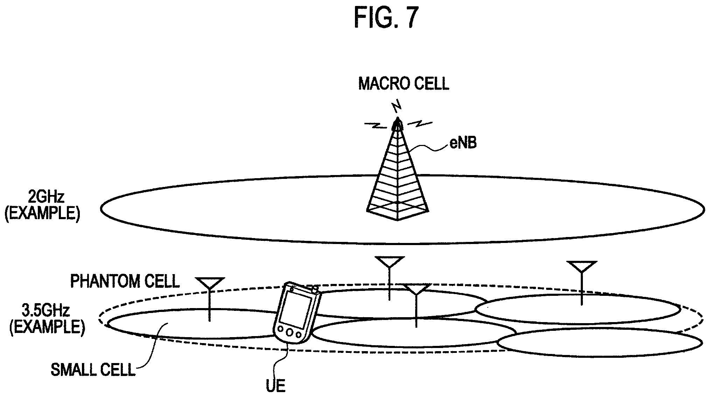

As illustrated in Fig. 7, unlike a conventional macro cell, a phantom cell can cover a wider area by linking many "small cells" to form one large cell.

### PRIOR ART DOCUMENT

### NON-PATENT DOCUMENT

Non-patent document 1: 3GPP TS36.300
EP 2 230 872 A1 relates to method of establishing multiple links with multiple component carries and related communication device. With reference to figure 3, this document discloses that the UE performs RRC procedures to establish a plurality of links corresponding to a plurality of component carriers. The first link is established by the first RRC procedure for purpose (s), e.g. initial connection establishment/handover. After the first link is established successfully, a first cell which the first link is connected to configures and sends the first RRC message to the UE for further link establishment. As a result, based on the first RRC message, the UE performs the second RRC procedure for establishing at least a link corresponding to at least a component carrier. The abovementioned second RRC procedure can be a RRC connection reconfiguration procedure, or a handover procedure, which is initiated by the first message received from the first cell. If the second procedure, the first message is an RRC CONNECTION RECONFIGURATION message, and an RRC CONNECTION RECONFIGURATION COMPLETE message is sent by the UE to complete establishment of the link(s) established by the second RRC procedure RRC procedure is the RRC connection reconfiguration. Furthermore, the UE can perform a random access procedure for uplink synchronization and initial cell access. The UE performs at least a random access procedure for synchronization with the cells associated to the links established by the second RRC procedure in the following cases. In the first case, the UE performs a random access procedure when the links established by the second RRC procedure are connected to cell(s) which is different from the first cell. The UE transmits a Random Access Preamble to each of the cell(s), and each cell responds a Random Access Response which includes Timing Alignment information for uplink synchronization, and a Temporary C-RNTI (Cell Radio Network Temporary Identifier) for UE identification. In addition, the abovementioned Temporary CRNTI is promoted to C-RNTI when the random access procedure is completed. That is, after the UE detects that the random access procedure is successful, each of the links established by the second RRC procedure or by the first RRC procedure is configured with a C-RNTI for PDCCH (Physical Downlink Control Channel) receptions, where the C-RNTIs can be the same or different between the links established in the first and second RRC procedures. Alternatively the C-RNTIs can be configured by the second RRC procedure for the links established in the second RRC procedure.

### SUMMARY OF THE INVENTION

Here, under the environment where a coverage area of a phantom cell and coverage areas of macro cells at least partially overlap each other as illustrated in Fig. 7, it is presumed that a C-RNTIₚₕ in the phantom cell is allocated to a mobile station in addition to a C-RNTI_{macro} in the macro cell.

The C-RNTI_{macro} in the macro cell is allocated in a "Contention based RA (Random Access) Procedure" or a handover procedure.

However, in existing LTE, a radio base station eNB has to first identify a mobile station UE and then allocate a C-RNTIₚₕ in a phantom cell to the mobile station UE.

This poses a problem that a C-RNTIₚₕ in a phantom cell is difficult to allocate in a "Contention based RA procedure" in the same way as a C-RNTI_{macro} in a macro cell.

In addition, existing LTE has another problem that allocation of a C-RNTIₚₕ in a phantom cell in a handover procedure, similar to the case of a C-RNTI_{macro} in a macro cell, is not preferable due to occurrence of short interruption of data transmission/reception when the handover procedure is activated.

Hence, the present invention has been made with a view to the above-described problems. Accordingly, an objective of the invention is to provide a mobile communication method, a radio base station, and a mobile station, which enable a C-RNTIₚₕ in a phantom cell to be allocated to a mobile station UE once the mobile station UE is identified.

The invention is defined by the appended set of claims. The embodiments and/or examples of the following description which are not covered by the appended set of claims are considered as not being part of the present invention.

A first feature of the present invention is summarized as a mobile communication method, including the step of: when a phantom cell formed by linking multiple small cells is established in a manner as to at least partially overlap a coverage area of a macro cell under control of a radio base station, notifying a mobile station in communication in the macro cell of a cell identifier in the phantom cell by the radio base station by sending a connection reconfiguration signal; and setting, by the mobile station, the cell identifier in the phantom cell in addition to a cell identifier in the macro cell.

A second feature of the present invention is summarized as a mobile communication method, including the step of: when a phantom cell formed by linking multiple small cells is established in a manner as to at least partially overlap a coverage area of a macro cell under control of a radio base station, and when a distance between a first mobile station and a second mobile station in which a same cell identifier is set and which are in communication in the macro cell becomes shorter than a threshold, notifying the first mobile station of a cell identifier in the phantom cell by the radio base station by sending a connection reconfiguration signal; and setting, by the first mobile station, the notified cell identifier in the phantom cell in addition to a cell identifier in the macro cell.

A third feature of the present invention is summarized as a mobile communication method, including the step of: when a phantom cell formed by linking multiple small cells is established in a manner as to at least partially overlap a coverage area of a macro cell under control of a radio base station, starting a non-contention based random access procedure by a mobile station in communication in the macro cell and by the radio base station; notifying the mobile station of a cell identifier in the phantom cell by sending a random access response signal by the radio base station in the non-contention based random access procedure; and setting, by the mobile station, the cell identifier in the phantom cell in addition to a cell identifier in the macro cell.

A fourth feature of the present invention is summarized as a mobile communication method, including the step of: when a phantom cell formed by linking multiple small cells is established in a manner as to at least partially overlap a coverage area of a macro cell under control of a radio base station, and when a distance between a first mobile station and a second mobile station in which a same cell identifier is set and which are in communication in the macro cell becomes shorter than a threshold, starting a non-contention based random access procedure by the radio base station and the first mobile station; notifying the first mobile station of a cell identifier in the phantom cell by sending a random access response signal by the radio base station in the non-contention based random access procedure; and setting, by the first mobile station, the notified cell identifier in the phantom cell in addition to a cell identifier in the macro cell.

A fifth feature of the present invention is summarized as a radio base station, including: a transmission unit configured to, when a phantom cell formed by linking multiple small cells is established in a manner as to at least partially overlap a coverage area of a macro cell under control of a radio base station, notify a mobile station in communication in the macro cell of a cell identifier in the phantom cell by sending a connection reconfiguration signal.

A sixth feature of the present invention is summarized as a radio base station, including: a transmission unit configured to, when a phantom cell formed by linking multiple small cells is established in a manner as to at least partially overlap a coverage area of a macro cell under control of a radio base station, and when a distance between a first mobile station and a second mobile station in which a same cell identifier is set and which are in communication in the macro cell becomes shorter than a threshold, notify the first mobile station of a cell identifier in the phantom cell by sending a connection reconfiguration signal.

A seventh feature of the present invention is summarized as a radio base station, including: a transmission unit configured to, when a phantom cell formed by linking multiple small cells is established in a manner as to at least partially overlap a coverage area of a macro cell under control of a radio base station, start a non-contention based random access procedure with a mobile station in communication with the radio base station in the macro cell and notify the mobile station of a cell identifier in the phantom cell by sending a random access response signal in the non-contention based random access procedure.

A eighth feature of the present invention is summarized as a radio base station, including: a transmission unit configured to, when a phantom cell formed by linking multiple small cells is established in a manner as to at least partially overlap a coverage area of a macro cell under control of a radio base station, and when a distance between a first mobile station and a second mobile station in which a same cell identifier is set and which are in communication in the macro cell becomes shorter than a threshold, start a non-contention based random access procedure with the first mobile station and notify the first mobile station of a cell identifier in the phantom cell by sending a random access response signal in the non-contention based random access procedure.

A ninth feature of the present invention is summarized as a mobile station, including: a reception unit configured to, when a phantom cell formed by linking multiple small cells is established in a manner as to at least partially overlap a coverage area of a macro cell under control of a radio base station, and when the mobile station is in communication in the macro cell, acquire a cell identifier in the phantom cell from the radio base station via a connection reconfiguration signal; and a setting unit configured to set the cell identifier in the phantom cell in addition to a cell identifier in the macro cell.

A tenth feature of the present invention is summarized as a mobile station, including: a reception unit configured to, when a phantom cell formed by linking multiple small cells is established in a manner as to at least partially overlap a coverage area of a macro cell under control of a radio base station, when the mobile station is in communication in the macro cell, and when a distance to another mobile station, in which the same cell identifier as that of the mobile station is set, becomes shorter than a threshold, acquire a cell identifier in the phantom cell from the radio base station via a connection reconfiguration signal; and a setting unit configured to set the notified cell identifier in the phantom cell in addition to a cell identifier in the macro cell.

A eleventh feature of the present invention is summarized as a mobile station, including: a reception unit configured to, when a phantom cell formed by linking multiple small cells is established in a manner as to at least partially overlap a coverage area of a macro cell under control of a radio base station, and when the mobile station is in communication in the macro cell, start a non-contention based random access procedure with the radio base station, and acquire a cell identifier in the phantom cell from the radio base station via a radon access response signal in the non-contention based random access procedure; and a setting unit configured to set the cell identifier in the phantom cell in addition to a cell identifier in the macro cell.

A twelfth feature of the present invention is summarized as a mobile station, including: a reception unit configured to, when a phantom cell formed by linking multiple small cells is established in a manner as to at least partially overlap a coverage area of a macro cell under control of a radio base station, when the mobile station is in communication in the macro cell, and when a distance to another mobile station, in which the same cell identifier as that of the mobile station is set, becomes shorter than a threshold, start a non-contention based random access procedure with the radio base station and acquire a cell identifier in the phantom cell from the radio base station via a random access response signal in the non-contention based random access procedure; and a setting unit configured to set the notified cell identifier in the phantom cell in addition to a cell identifier in the macro cell.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a radio base station according to the first embodiment of the present invention.
[Fig. 3] Fig. 3 is a functional block diagram of a mobile station according to the first embodiment of the present invention.
[Fig. 4] Fig. 4 is a sequential diagram illustrating an operation of the mobile communication system according to the first embodiment of the present invention.
[Fig. 5] Fig. 5 is a sequential diagram illustrating an operation of the mobile communication system according to the first embodiment of the present invention.
[Fig. 6] Fig. 6 is a diagram for illustrating a conventional technology.
[Fig. 7] Fig. 7 is a diagram for illustrating the conventional technology.

### MODE FOR CARRYING OUT THE INVENTION

### (Mobile communication system according to the first embodiment of the present invention)

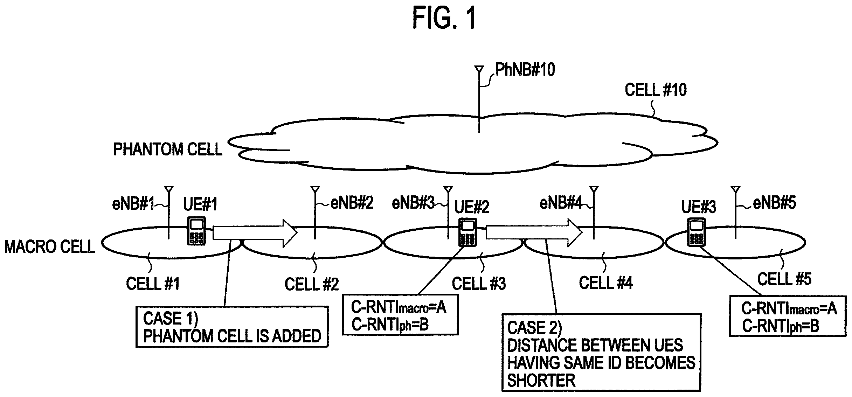

Described by referring to Figs. 1 to 5 is a mobile communication system according to a first embodiment of the present invention.

As illustrated in Fig. 1, a mobile communication system according to the present embodiment is the LTE mobile communication system, which includes a radio base station PhNB#1 configured to manage a cell #10, a radio base station eNB#1 configured to manage a cell #1, a radio base station eNB#2 configured to manage a cell #2, a radio base station eNB#3 configured to manage a cell #3, a radio base station eNB#4 configured to manage a cell #4, and a radio base station eNB#5 configured to manage a cell #5.

Here, the cell #10 is a phantom cell formed by linking multiple small cells and the cells #1 to #5 are macro cells.

As illustrated in Fig. 1, a coverage area of the cell #10 and coverage areas of the cells #1 to #5 are deployed to at least partially overlap each other.

In the mobile communication system according to the present embodiment, a same C-RNTIₚₕ can be allocated to multiple mobile stations UE in the cell #10.

On the other hand, in the mobile communication system according to the present embodiment, a same C-RNTIₚₕ cannot be allocated to multiple mobile stations UE in the cells #1 to #5.

In the mobile communication system according the present embodiment, multiple C-RNTIs (in other words, C-RNTI_{macro} and C-RNTIₚₕ) can be allocated to one mobile station UE.

The description is given to the following two cases in the present embodiment: case 1 where the cell #10 as a phantom cell is added to a mobile station UE which is in communication in the cell #1 as a macro cell; and case 2 where a mobile station UE#2 which is in communication in the cell #10 comes close to a mobile station UE#5 having the same C-RNTIs (C-RNTI_{macro} = A and C-RNTIₚₕ = B).

The configurations of the radio base stations eNB#1 to eNB#5 are basically same, and the configuration of a radio base station eNB as a representative is described.

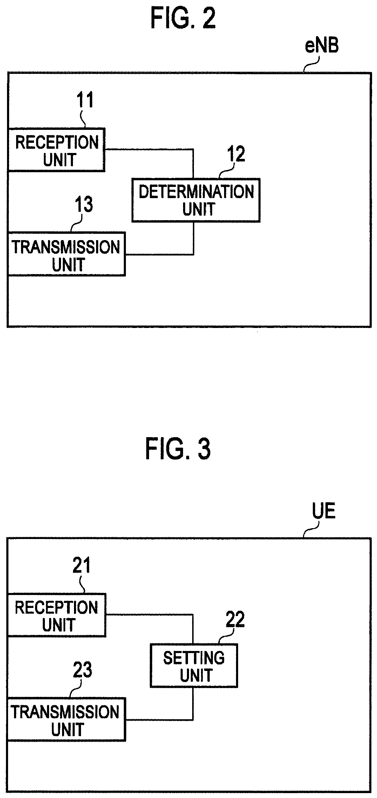

As illustrated in Fig. 2, the radio base station eNB#1 according to the present embodiment includes a reception unit 11, a determination unit 12, and a transmission unit 13.

The reception unit 11 is configured to receive various kinds of signals from the mobile station UE in the cell #1 and the radio base stations eNB#10/eNB#2 to #5. The transmission unit 13 is configured to transmit various kinds of signals to the mobile station UE in the cell #1 and the radio base stations eNB#10/eNB#2 to #5.

The determination unit 12 is configured to determine that a new C-RNTIₚₕ of the cell #10 is allocated to the mobile stations UE#1 to UE#3 in the case 1 or 2.

Specifically, as illustrated in Fig. 1, the determination unit 12 determines to allocate the C-RNTIₚₕ of the cell #10 to the mobile station UE which is in communication in the cell #1 when the above-described cell #10 is established (in other words, in the case 1).

In addition, when the cell #10 is established for the mobile station UE#2, and when a distance to another mobile station UE in which the same C-RNTIₚₕ as that of mobile station UE#2 is set and which is in communication in the cell #4/#5 becomes shorter than a predetermined threshold (in other words, in the case 2) as illustrated in Fig. 1, the determination unit 12 determines to allocate the C-RNTIₚₕ of the cell #10 to the mobile station UE#2 which is in communication in the cell #4 in order to avoid a collision between the mobile stations UE.

Instead, the determination unit 12 may determine to allocate the C-RNTIₚₕ of the cell #10 to the mobile station UE#3 .

In addition, in such a case, the determination unit 12 may determine to allocate a new C-RNTI_{macro} in the cell #4, in place of allocating the C-RNTIₚₕ of the cell #10, to the mobile station UE #2 which is in communication in the cell #4.

In the case 1 or 2, the transmission unit 13 may notify the mobile stations UE#1 to UE#3 of the C-RNTIₚₕ in the cell #10 (or the C-RNTI_{macro} in the cell #4) by sending a "RRC connection reconfiguration."

At this time, the notification may be notified together with the "RRC connection reconfiguration" which makes such instructions as addition or deletion of bearer and addition of phantom cell.

Alternatively, in the case 1 or 2, the transmission unit 13 may notify the mobile stations UE#1 to UE#3 of the C-RNTIph of the cell #10 (or C-RNTI_{macro} in the cell #4) in a "Non-connection RA procedure."

The configurations of the mobile stations UE#1 to UE#3 according to the present embodiment are basically same, and the configuration of a mobile station UE as a representative is described.

As illustrated in Fig. 3, the mobile station UE according to the present embodiment includes a reception unit 21, a setting unit 22, and a transmission unit 23.

The reception unit 21 is configured to receive various kinds of signals from the radio base stations PhNB#10/eNB#1/eNB#2/eNB#3. The transmission unit 23 is configured to transmit various kinds of signals to the radio base stations PhNB#10/eNB#1/eNB#2/eNB#3.

For example, the reception unit 21 receives the C-RNTIₚₕ and C-RNTI_{macro} allocated to the mobile station UE from the radio base stations eNB#1 to eNB#5.

Specifically, as illustrated in Fig. 1, the reception unit 21 acquires the C-RNTIₚₕ in the cell #10 from the radio base station eNB#1 when the mobile station UE is in communication in the cell #1, and when the cell #10 is established (in other words, in the case 1).

Also, the reception unit 21 acquires the C-RNTIₚₕ in the cell #10 from the radio base station eNB#4 when the mobile station UE is in communication in the cell #1, and when a distance to another mobile station UE in which the same C-RNTIₚₕ as that of the mobile station UE is set becomes shorter than a threshold (in other words, in the case 2) as illustrated in Fig. 1.

Here, the reception unit 21 may acquire the C-RNTIₚₕ in the cell #10 via the "RRC connection reconfiguration" or acquire the C-RNTIₚₕ in the cell #10 via a "RA response" which is received in the "Non-contention RA procedure."

The setting unit 22 is configured to set the C-RNTIₚₕ acquired by the reception unit 21 via the "RRC connection reconfiguration" or in the "Non-contention RA procedure" as a C-RNTIₚₕ allocated to the mobile station UE in the cell #10.

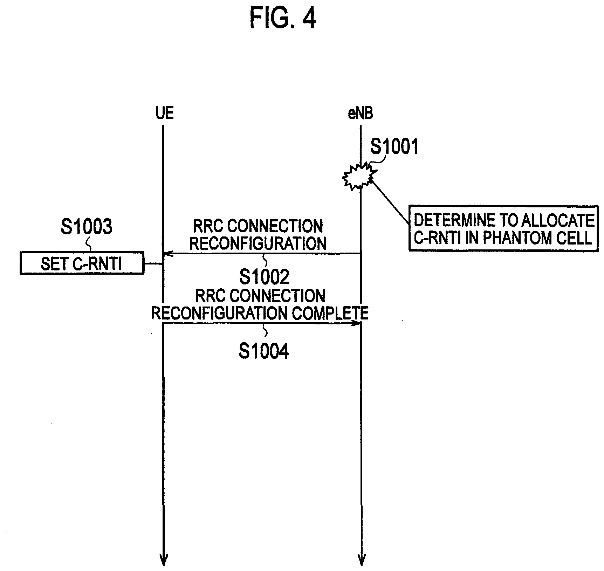

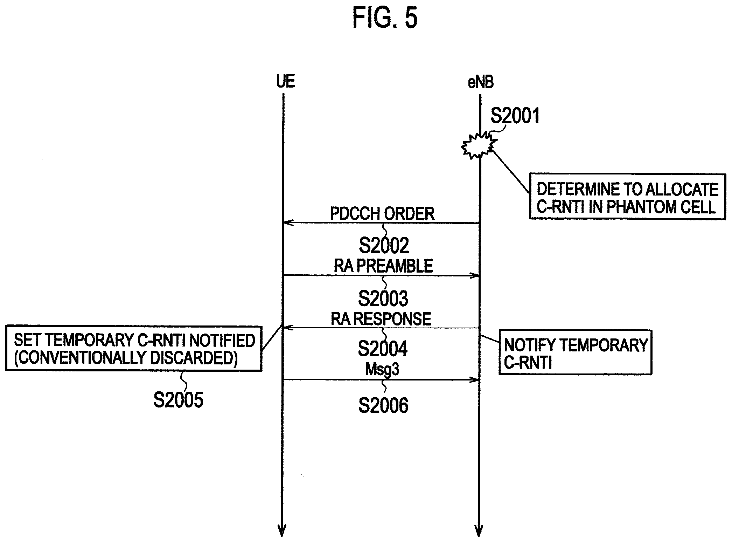

Described hereinafter by referring to Figs. 4 and 5 is an operation of the mobile communication system according to the present embodiment.

Firstly, described by referring to Fig. 4 is exemplary operation 1 of the mobile communication system according to the present embodiment.

As illustrated in Fig. 4, when determining to add a phantom cell to mobile station UE which is in communication in a cell under control of a radio base station eNB at step S1001, the radio base station eNB transmits a "RRC Connection reconfiguration" including a C-RNTIₚₕ allocated to the mobile station UE in the phantom cell at step S1002.

The mobile station UE sets the C-RNTIₚₕ included in the received "RRC Connection reconfiguration" as a C-RNTIₚₕ allocated to the mobile station UE in the phantom cell at step S1003, and transmits a "RRC Connection reconfiguration complete" to the radio base station eNB at step S1004.

The "RRC Connection reconfiguration" may include an identifier of a cell which is associated with the C-RNTI to be allocated or an identifier of the radio base station eNB from which the identifier of the cell is removed.

Secondly, described by referring to Fig. 5 is the exemplary operation 2 of the mobile station system according to the present embodiment.

As illustrated in Fig. 5, when the radio base station eNB determines to add a phantom cell to a mobile station UE in communication in a cell under control of the radio base station eNB at step S2001, the radio base station eNB transmits a "PDCCH order" to the mobile station UE to start a "Non-contention RA procedure" with the mobile station UE at step S2002.

At step S2003, the mobile station UE transmits a "RA preamble" to the radio base station eNB.

At step S2004, the radio base station eNB transmits a "RA response" including the C-RNTIₚₕ allocated to the mobile station UE in the phantom cell as "temporary C-RNTI" to the mobile station UE.

The mobile station UE set "temporary C-RNTI" included in "RA response" which is conventionally discarded as the C-RNTIₚₕ allocated to the mobile station UE in the phantom cell at step S2005, and transmits "MSG3 (PUSCH corresponding to a "UL grant" instructed by the "RA response") " to the radio base station eNB at step S2006.

The above-described non-contention based RA procedure may be implemented in any cell to which the mobile station UE is connected. Also, it may be implemented in a cell having different steps.

Here, the radio base station eNB may notify that a new C-RNTIₚₕ is allocated to the mobile station UE in the phantom cell in the "PDCCH order," "RA response," or the like.

With the above-described configuration, the radio base station eNB can notify the mobile station UE which is in communication in the cell under control of the radio base station eNB of a new C-RNTIₚₕ allocated to the mobile station UE in the phantom cell. Accordingly, in the case 1 and case 2, the C-RNTIₚₕ can be allocated with the recognition of a specific mobile station UE and short interruption of data transmission/reception along with the handover procedure can be avoided.

The features of the present embodiment may also be expressed as follows.

A first feature of the present embodiment is summarized as a mobile communication method, including the step of: when a cell #10 (phantom cell) formed by linking multiple small cells is established in a manner as to at least partially overlap a coverage area of a cell #1 (macro cell) under control of a radio base station eNB#1, notifying a mobile station UE#1 in communication in the cell #1 of a C-RNTIₚₕ (cell identifier) in the cell #10 by the radio base station eNB#1 by sending a "RRC connection reconfiguration (connection reconfiguration signal) "; and setting, by the mobile station UE#1, the C-RNTIₚₕ in the cell #10 in addition to a C-RNTI_{macro} in the cell #1.

A second feature of the present embodiment is summarized as a mobile communication method, including the step of: when a cell #10 formed by linking multiple small cells is established in a manner as to at least partially overlap a coverage area of a cell #4 under control of a radio base station eNB#4, and when a distance between a mobile station UE#2 (first mobile station) and a mobile station UE#3 (second mobile station) in which a same C-RNTI_{macro}/C-RNTIₚₕ is set and which are in communication in the cell #4/#5 becomes shorter than a threshold, notifying the mobile station UE#2 of a C-RNTIₚₕ in the cell #10 by the radio base station eNB#4 by sending a "RRC connection reconfiguration"; and setting, by the mobile station UE#2, the notified C-RNTIₚₕ in the cell #10 in addition to a C-RNTI_{macro} in the cell #4.

A third feature of the present embodiment is summarized as a mobile communication method, including the step of: when a cell #10 (phantom cell) formed by linking multiple small cells is established in a manner as to at least partially overlap a coverage area of a cell #1 (macro cell) under control of a radio base station eNB#1, starting a "Non-connection RA procedure (non-contention based random access procedure)" by a mobile station UE#1 in communication in the cell #1 and by the radio base station eNB#1; notifying the mobile station UE#1 of a C-RNTIₚₕ in the cell #10 by sending a "RA response (random access response signal)" by the radio base station eNB#1 in the "Non-connection RA procedure"; and setting, by the mobile station UE#1, the C-RNTIₚₕ in the cell #10 in addition to a C-RNTI_{macro} in the cell #1.

A fourth feature of the present embodiment is summarized as a mobile communication method, including the step of: when a cell #10 formed by linking multiple small cells is established in a manner as to at least partially overlap a coverage area of a cell #4 under control of a radio base station eNB#4, and when a distance between a mobile station UE#2 and a mobile station UE#3 in which a same C-RNTI_{macro}/C-RNTIₚₕ is set and which are in communication in the cell #4/#5 becomes shorter than a threshold, starting a "Non-connection RA procedure" by the radio base station eNB#4 and the mobile station UE#2; notifying the mobile station UE#2 of a C-RNTIₚₕ in the cell #10 by sending a "RA response" by the radio base station eNB#4 in the "Non-connection RA procedure"; and setting, by the mobile station UE#2, the notified C-RNTIₚₕ in the cell #10 in addition to a C-RNTI_{macro} in the cell #4.

A fifth feature of the present embodiment is summarized as a radio base station eNB#1, including: a transmission unit 13 configured to, when a cell #10 formed by linking multiple small cells is established in a manner as to at least partially overlap a coverage area of a cell #1 under control of a radio base station eNB#1, notify a mobile station UE#1 in communication in the cell #1 of a C-RNTIₚₕ in the cell #10 by sending a "RRC connection reconfiguration."

A sixth feature of the present embodiment is summarized as a radio base station eNB#4, including: a transmission unit 13 configured to, when a cell #10 formed by linking multiple small cells is established in a manner as to at least partially overlap a coverage area of a cell #4 under control of a radio base station eNB#4 , and when a distance between a mobile station UE#2 and a mobile station UE#3 in which a same C-RNTI_{macro}/C-RNTIₚₕ is set and which are in communication in the cell #4/#5 becomes shorter than a threshold, notify the mobile station UE#2 of a C-RNTIₚₕ in the cell #10 by sending a "RRC connection reconfiguration."

A seventh feature of the present embodiment is summarized as a radio base station eNB#1, including: a transmission unit 13 configured to, when a cell #10 formed by linking multiple small cells is established in a manner as to at least partially overlap a coverage area of a cell #1 under control of a radio base station eNB#1, start a "Non-connection RA procedure" with a mobile station UE#1 in communication with the radio base station eNB#1 in the cell #1 and notify the mobile station UE#1 of a C-RNTIₚₕ in the cell #10 by sending a "RA response" in the "Non-connection RA procedure."

A eighth feature of the present embodiment is summarized as a radio base station eNB#4, including: a transmission unit 13 configured to, when a cell #10 formed by linking multiple small cells is established in a manner as to at least partially overlap a coverage area of a cell #4 under control of a radio base station eNB#4, and when a distance between a mobile station UE#2 and a mobile station UE#3 in which a same C-RNTI_{macro}/C-RNTIₚₕ is set and which are in communication in the cell #4/#5 becomes shorter than a threshold, start a "Non-connection RA procedure" with the mobile station UE#2 and notify the mobile station UE#2 of a C-RNTIₚₕ in the cell #10 by sending a "RA response" in the "Non-connection RA procedure."

A ninth feature of the present embodiment is summarized as a mobile station UE#1, including: a reception unit 21 configured to, when a cell #10 formed by linking multiple small cells is established in a manner as to at least partially overlap a coverage area of a cell #1 under control of a radio base station eNB#1, and when the mobile station UE#1 is in communication in the cell #1, acquire a C-RNTIₚₕ in the cell #10 from the radio base station eNB#1 via a "RRC connection reconfiguration"; and a setting unit 22 configured to set the C-RNTIₚₕ in the cell #10 in addition to a C-RNTI_{macro} in the cell #1.

A tenth feature of the present embodiment is summarized as a mobile station UE#2, including: a reception unit 21 configured to, when a cell #10 formed by linking multiple small cells is established in a manner as to at least partially overlap a coverage area of a cell #4 under control of a radio base station eNB#4, when the mobile station UE#2 is in communication in the cell #4, and when a distance to another mobile station UE#3, in which the same C-RNTI_{macro}/C-RNTIₚₕ as that of the mobile station UE#2 is set, becomes shorter than a threshold, acquire a C-RNTIₚₕ in the cell #10 from the radio base station eNB#4 via a "RRC connection reconfiguration"; and a setting unit 22 configured to set the C-RNTIₚₕ in the cell #10 in addition to a C-RNTI_{macro} in the cell #4.

A eleventh feature of the present embodiment is summarized as a mobile station UE#1, including: a reception unit 21 configured to, when a cell #10 formed by linking multiple small cells is established in a manner as to at least partially overlap a coverage area of a cell #1 under control of a radio base station eNB#1, and when the mobile station UE#1 is in communication in the cell #1, start a "Non-connection RA procedure" with the radio base station eNB#1, and acquire a C-RNTIₚₕ in the cell #10 from the radio base station eNB#1 via a "RA response" in the "Non-connection RA procedure"; and a setting unit 22 configured to set the C-RNTIₚₕ in the cell #10 in addition to a C-RNTI_{macro} in the cell #1.

A twelfth feature of the present embodiment is summarized as a mobile station UE#2, including: a reception unit 21 configured to, when a cell #10 formed by linking multiple small cells is established in a manner as to at least partially overlap a coverage area of a cell #4 under control of a radio base station eNB#4, when the mobile station UE#2 is in communication in the cell #4, and when a distance to another mobile station UE#3, in which the same C-RNTI_{macro}/C-RNTIₚₕ as that of the mobile station UE#2 is set, becomes shorter than a threshold, start a "Non-connection RA procedure" with the radio base station eNB#4 and acquire a C-RNTIₚₕ in the cell #10 from the radio base station eNB#4 via a "RA response" in the "Non-connection RA procedure"; and a setting unit 22 configured to set the notified C-RNTIₚₕ in the cell #10 in addition to a C-RNTI_{macro} in the cell #4.

Here, the foregoing operations of the mobile stations UE#1 to UE#3 and the radio base stations eNB#1 to eNB#5, PhNB#10 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile stations UE#1 to UE#3 and the radio base stations eNB#1 to eNB#5PhNB#10. Otherwise, the storage medium and the processor may be provided as discrete components inside the mobile stations UE#1 to UE#3 and the radio base stations eNB#1 to eNB#5, PhNB#10.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention, which is determined by the description of the scope of claims. Therefore, the description of the specification is intended for illustrative explanation only and does not impose any limited interpretation on the present invention.

### INDUSTRIAL APPLICABILITY

As described above, the present invention can provide a mobile communication method, a radio base station, and a mobile station, which can allocate a C-RNTIₚₕ in a phantom cell after a mobile station is identified.

### EXPLANATION OF REFERENCE NUMERALS

eNB#1 to eNB#5, PhNB# 10 radio base station
UE mobile station
11, 22 reception unit
12 determination unit
13, 23 transmission unit
22 setting unit

## Claims

1. A mobile communication method, comprising the step of:
when a second cell is established in a manner as to at least partially overlap a coverage area of a first cell under control of a radio base station, notifying (S1002) a mobile station in communication in the first cell of a Cell-Radio Network Temporary Identity, C-RNTI, in the second cell by the radio base station by sending a connection reconfiguration signal; and
setting (S1003), by the mobile station, the Cell-Radio Network Temporary Identity, C-RNTI, in the second cell in addition to a Cell-Radio Network Temporary Identity, C-RNTI, in the first cell.

2. A mobile communication method, comprising the step of:
when a second cell is established in a manner as to at least partially overlap a coverage area of a first cell under control of a radio base station, starting a non-contention based random access procedure by a mobile station in communication in the first cell and by the radio base station;
notifying (S2004) the mobile station of a Cell-Radio Network Temporary Identity, C-RNTI, in the second cell by sending a random access response signal by the radio base station in the non-contention based random access procedure; and
setting (S2005), by the mobile station, the Cell-Radio Network Temporary Identity, C-RNTI, in the second cell in addition to a Cell-Radio Network Temporary Identity, C-RNTI, in the first cell.

3. A radio base station, comprising:
a transmission unit (13) configured to, when a second cell is established in a manner as to at least partially overlap a coverage area of a first cell under control of a radio base station, notify a mobile station in communication in the first cell of a Cell-Radio Network Temporary Identity, C-RNTI, in the second cell by sending a connection reconfiguration signal.

4. A radio base station, comprising:
a transmission unit (13) configured to, when a second cell is established in a manner as to at least partially overlap a coverage area of a first cell under control of a radio base station, start a non-contention based random access procedure with a mobile station in communication with the radio base station in the first cell and notify the mobile station of a Cell-Radio Network Temporary Identity, C-RNTI, in the second cell by sending a random access response signal in the non-contention based random access procedure.

5. A mobile station, comprising:
a reception unit (21) configured to, when a second cell is established in a manner as to at least partially overlap a coverage area of a first cell under control of a radio base station, and when the mobile station is in communication in the first cell, acquire a Cell-Radio Network Temporary Identity, C-RNTI, in the second cell from the radio base station via a connection reconfiguration signal; and
a setting unit (22) configured to set the Cell-Radio Network Temporary Identity, C-RNTI, in the second cell in addition to a Cell-Radio Network Temporary Identity, C-RNTI, in the first cell.

6. A mobile station, comprising:
a reception unit (21) configured to, when a second cell is established in a manner as to at least partially overlap a coverage area of a first cell under control of a radio base station, and when the mobile station is in communication in the first cell, start a non-contention based random access procedure with the radio base station, and acquire a Cell-Radio Network Temporary Identity, C-RNTI, in the second cell from the radio base station via a radon access response signal in the non-contention based random access procedure; and
a setting unit (22) configured to set the Cell-Radio Network Temporary Identity, C-RNTI, in the second cell in addition to a Cell-Radio Network Temporary Identity, C-RNTI, in the first cell.

## Patentansprüche

1. Mobilkommunikationsverfahren, umfassend den folgenden Schritt:
wenn eine zweite Zelle derart eingerichtet wird, dass sie sich mindestens teilweise mit einem Abdeckungsbereich einer ersten Zelle, die von einer Funkbasisstation gesteuert wird, überlappt, Benachrichtigen (S1002) einer Mobilstation in Kommunikation in der ersten Zelle über eine Cell-Radio Network Temporary Identity (vorübergehende Zellfunknetzwerkidentität), C-RNTI, in der zweiten Zelle durch die Funkbasisstation durch Senden eines Verbindungsneukonfigurationssignals; und
Einstellen (S1003), durch die Mobilstation, der Cell-Radio Network Temporary Identity, C-RNTI, in der zweiten Zelle zusätzlich zu einer Cell-Radio Network Temporary Identity, C-RNTI, in der ersten Zelle.

2. Mobilkommunikationsverfahren, umfassend den folgenden Schritt:
wenn eine zweite Zelle derart eingerichtet wird, dass sie sich mindestens teilweise mit einem Abdeckungsbereich einer ersten Zelle, die von einer Funkbasisstation gesteuert wird, überlappt, Beginnen einer nichtkonfliktbasierten Direktzugriffsprozedur durch eine Mobilstation in Kommunikation in der ersten Zelle und durch die Funkbasisstation;
Benachrichtigen (S2004) der Mobilstation über eine Cell-Radio Network Temporary Identity, C-RNTI, in der zweiten Zelle durch Senden eines Direktzugriffsantwortsignals durch die Funkbasisstation in der nichtkonfliktbasierten Direktzugriffsprozedur; und
Einstellen (S2005), durch die Mobilstation, der Cell-Radio Network Temporary Identity, C-RNTI, in der zweiten Zelle zusätzlich zu einer Cell-Radio Network Temporary Identity, C-RNTI, in der ersten Zelle.

3. Funkbasisstation, umfassend:
eine Übertragungseinheit (13), die konfiguriert ist, um eine Mobilstation in Kommunikation in der ersten Zelle über eine Cell-Radio Network Temporary Identity, C-RNTI, in der zweiten Zelle durch Senden eines Verbindungsneukonfigurationssignals zu benachrichtigen, wenn eine zweite Zelle derart eingerichtet wird, dass sie sich mindestens teilweise mit einem Abdeckungsbereich einer ersten Zelle, die von einer Funkbasisstation gesteuert wird, überlappt.

4. Funkbasisstation, umfassend:
eine Übertragungseinheit (13), die konfiguriert ist, um eine nichtkonfliktbasierte Direktzugriffsprozedur mit einer Mobilstation in Kommunikation mit der Funkbasisstation in der ersten Zelle zu beginnen und die Mobilstation über die Cell-Radio Network Temporary Identity, C-RNTI, in der zweiten Zelle durch Senden eines Direktzugriffsantwortsignals in der nichtkonfliktbasierten Direktzugriffsprozedur zu benachrichtigen, wenn eine zweite Zelle derart eingerichtet wird, dass sie sich mindestens teilweise mit einem Abdeckungsbereich einer ersten Zelle, die von einer Funkbasisstation gesteuert wird, überlappt.

5. Mobilstation, umfassend:
eine Empfangseinheit (21), die konfiguriert ist, um eine Cell-Radio Network Temporary Identity, C-RNTI, in der zweiten Zelle von der Funkbasisstation über ein Verbindungsneukonfigurationssignal zu erwerben, wenn eine zweite Zelle derart eingerichtet wird, dass sie sich mindestens teilweise mit einem Abdeckungsbereich einer ersten Zelle, die von einer Funkbasisstation gesteuert wird, überlappt, und wenn die Mobilstation in der ersten Zelle in Kommunikation ist; und
eine Einstelleinheit (22), die konfiguriert ist, um die Cell-Radio Network Temporary Identity, C-RNTI, in der zweiten Zelle zusätzlich zu einer Cell-Radio Network Temporary Identity, C-RNTI, in der ersten Zelle einzustellen.

6. Mobilstation, umfassend:
eine Empfangseinheit (21), die konfiguriert ist, um eine nichtkonfliktbasierte Direktzugriffsprozedur mit der Funkbasisstation zu beginnen und eine Cell-Radio Network Temporary Identity, C-RNTI, in der zweiten Zelle von der Funkbasisstation über ein Direktzugriffsantwortsignal in der nichtkonfliktbasierten Direktzugriffsprozedur zu erwerben, wenn eine zweite Zelle derart eingerichtet wird, dass sie sich mindestens teilweise mit einem Abdeckungsbereich einer ersten Zelle, die von einer Funkbasisstation gesteuert wird, überlappt, und wenn die Mobilstation in der ersten Zelle in Kommunikation ist; und
eine Einstelleinheit (22), die konfiguriert ist, um die Cell-Radio Network Temporary Identity, C-RNTI, in der zweiten Zelle zusätzlich zu einer Cell-Radio Network Temporary Identity, C-RNTI, in der ersten Zelle einzustellen.

## Revendications

1. Procédé de communication mobile, comprenant l'étape suivante :
lorsqu'une seconde cellule est établie de manière à chevaucher au moins partiellement une zone de couverture d'une première cellule sous contrôle d'une station de base radio, notification (S1002) d'une station mobile en communication dans la première cellule d'une identité temporaire de réseau radio cellulaire, C-RNTI, dans la seconde cellule par la station de base radio par envoi d'un signal de reconfiguration de connexion ; et
paramétrage (S1003), par la station mobile, de l'identité temporaire de réseau radio cellulaire, C-RNTI, dans la seconde cellule en plus d'une identité temporaire de réseau radio cellulaire, C-RNTI, dans la première cellule.

2. Procédé de communication mobile, comprenant l'étape suivante :
lorsqu'une seconde cellule est établie de manière à chevaucher au moins partiellement une zone de couverture d'une première cellule sous contrôle d'une station de base radio, lancement d'une procédure d'accès aléatoire sans conflit par une station mobile en communication dans la première cellule et par la station de base radio ;
notification (52004) de la station mobile d'une identité temporaire de réseau radio cellulaire, C-RNTI, dans la seconde cellule par envoi d'un signal de réponse d'accès aléatoire par la station de base radio dans la procédure d'accès aléatoire sans conflit ; et
paramétrage (S2005), par la station mobile, de l'identité temporaire de réseau radio cellulaire, C-RNTI, dans la seconde cellule en plus d'une identité temporaire de réseau radio cellulaire, C-RNTI, dans la première cellule.

3. Station de base radio, comprenant :
une unité de transmission (13) configurée de manière, lorsqu'une seconde cellule est établie de manière à chevaucher au moins partiellement une zone de couverture d'une première cellule sous contrôle d'une station de base radio, à notifier une station mobile en communication dans la première cellule d'une identité temporaire de réseau radio cellulaire, C-RNTI, dans la seconde cellule en envoyant un signal de reconfiguration de connexion.

4. Station de base radio, comprenant :
une unité de transmission (13) configurée de manière, lorsqu'une seconde cellule est établie de manière à chevaucher au moins partiellement une zone de couverture d'une première cellule sous contrôle d'une station de base radio, à lancer une procédure d'accès aléatoire sans conflit avec une station mobile en communication avec la station de base radio dans la première cellule et à notifier la station mobile d'une identité temporaire de réseau radio cellulaire, C-RNTI, dans la seconde cellule en envoyant un signal de réponse d'accès aléatoire dans la procédure d'accès aléatoire sans conflit.

5. Station mobile, comprenant :
une unité de réception (21) configurée de manière, lorsqu'une seconde cellule est établie de manière à chevaucher au moins partiellement une zone de couverture d'une première cellule sous contrôle d'une station de base radio, et lorsque la station mobile est en communication dans la première cellule, à acquérir une identité temporaire de réseau radio cellulaire, C-RNTI, dans la seconde cellule auprès de la station de base radio via un signal de reconfiguration de connexion ; et
une unité de paramétrage (22) configurée de manière à paramétrer l'identité temporaire de réseau radio cellulaire, C-RNTI, dans la seconde cellule en plus d'une identité temporaire de réseau radio cellulaire, C-RNTI, dans la première cellule.

6. Station mobile, comprenant :
une unité de réception (21) configurée de manière, lorsqu'une seconde cellule est établie de manière à chevaucher au moins partiellement une zone de couverture d'une première cellule sous contrôle d'une station de base radio, et lorsque la station mobile est en communication dans la première cellule, à lancer une procédure d'accès aléatoire sans conflit avec la station de base radio, et acquérir une identité temporaire de réseau radio cellulaire, C-RNTI, dans la seconde cellule auprès de la station de base radio via un signal de réponse d'accès aléatoire dans la procédure d'accès aléatoire sans conflit ; et
une unité de paramétrage (22) configurée de manière à paramétrer l'identité temporaire de réseau radio cellulaire, C-RNTI, dans la seconde cellule en plus d'une identité temporaire de réseau radio cellulaire, C-RNTI, dans la première cellule.
